# FASCICULE DE BREVET EUROPEEN

(11) **EP 1 001 066 B1**
(45) Date de publication et mention de la délivrance du brevet: **05.10.2011**
(21) Numéro de dépôt: 99450025.4
(22) Date de dépôt: 09.11.1999
(51) Int. Cl.: D04H 3/02

(54) **Procédé et dispositif de déposé au contact de fils de fibres pre-imprégnées notamment pour la réalisation de structures complexes en matériau composite polymérisé par ionisation**
Verfahren und Vorrichtung zum Kontaktauflegen eines Fadens aus vorimprägnierten Fasern insbesondere zur Herstellung eines Formteils aus einem ionisationspolymerisierten Kompositwerkstoff
Method and apparatus for the contact application of yarns of pre-impregnated fibres in particular for making complex structures of composite material polymerised by ionisation

(30) Priorité: 10.11.1998 FR 9814297
(43) Date de publication de la demande: 17.05.2000
(73) Titulaire: ASTRIUM SAS, 75016 Paris (FR)
(72) Inventeur: Darrieux, Jean-Louis, 33112 Saint-Laurent-du-Médoc (FR); Fuchs, Jean-François, 33480 Sainte-Hélène (FR)
(74) Mandataire: Coquel, Jean-Marc

(56) Documents cités:
- EP-A- 0 846 551
- US-A- 4 591 402
- US-A- 4 882 007
- US-A- 5 700 347

## Description

La présente invention a trait à la réalisation de structures en matériau composite et plus précisément de pièces de forme plus ou moins complexe, constituées par la superposition sur un support approprié de couches de fibres continues pré-imprégnées notamment d'une résine poylmerisable par ionisation et mises en place par dépose au contact.

L'invention vise plus particulièrement une nouvelle technique de dépose au contact de fils de fibres pré-imprégnées. Par fil, on entend dans la présente description un groupe de fibres continues, agglomérées, en forme de ruban ou bande, un seul fil ou plusieurs fils juxtaposés pour forme une nappe pouvant être déposée conformément à l'invention.

La dépose au contact de tels fils est bien connue et présente l'avantage de réaliser avec des coûts de production réduits des pièces pouvant avoir des formes complexes et comportant notamment des parties concaves, à l'aide de têtes de dépose de fils pré-imprégnés, par exemple de résine thermodurcissable.

On connaît la document US-A-4882007 qui se rapport à un dispositif pour l'application sur un moule d'une bande formée de plusieurs fibres pré-imprégnéede de résine. Le dispositif d'application comporte une bobine d'alimentation de la bande de fibre et une bobine de réception pour bobiner le film protecteur, des rouleaux,de guidage et de pressage et un dispositif de coupe, l'ensemble étant supporté par un bras de robot. Lors du fonctionnement du dispositif, les rouleaux sont amenés à presser la bande de fibre contre une structure rigide. La bande encore collante vient alors s'adhérer à la surface de la structure ou à une couche de bande précédemment déposée sur la structure. Lorsque le dispositif de dépose arrive à la fin de la dépose de la couche, le dispositif de coupe constitué d'un porte-lame et d'une lame est mis en oeuvre par l'intermédiaire d'un vérin pour venir couper la bande de fibre.

Le document US-A-4591402 décrit un dispositif d'application de fibres pré-imprégnées sur un moule ainsi que le procédé mettant en oeuvre un tel disopositif. Le dispositif d'application comprend une bobine d'alimentation de fibres et une bobine réceptrice du film protecteur, un premier élément d'application et un deuxième élément d'application situé en arrière dudit premier élément par rapport au sens du défilement, un dispositif de coupe situé entre les deux éléments d'application. Le procédé consiste à guider la fibre à déposer vers la partie inférieure du premier élément d'application qui vient presser la fibre contre la surface du moule, A la fin de l'opération de la dépose, le dispositif de coupe est pivoté de manière à placer la lame perpendiculairement à la fibre pour procéder au sectionnement.

Cependant, toutes les têtes de dépose au contact connues mettent en oeuvre une même technique d'acheminement des fils sous un galet de dépose consistant, pour initier une séquence de dépose, à pousser, par exemple à l'aide d'une paire de poulies motrices, l'extrémité libre de la nappe de fils en direction du galet de dépose pour qu'elle soit pincée entre ce dernier et la surface à recouvrir.

En effet, à la fin de chaque séquence de dépose, la nappe doit être sectionnée, ce qui s'opère entre le galet de dépose et les poulies d'amenée et oblige donc, pour la séquence de dépose suivante, à "pousser" ladite nappe comme expliqué plus haut.

Pour les types et natures de fibres pré-imprégnées habituellement utilisées pour une telle dépose, le "poussage" des fils ne présente pas de difficultés ou de problèmes particuliers, car les fils ou nappes présentent notamment une rigidité suffisante.

Cependant, des difficultés surgissent lorsque les fils ou nappes présentent une rigidité insuffisante. Leur souplesse ne permet pas de les diriger convenablement vers le point d'ancrage sur le support à revêtir. L'impossibilité d'un acheminement correct étant par ailleurs accentué dans le cas où les fibres sont imprégnées d'une résine plus collante que les résines habituelles. C'est en particulier le cas généralement des résines ionisables qui sont polymérisées, après mise en place des fils, dans une unité de polymérisation par ionisation.

Le caractère plus collant de la résine rend par ailleurs problématique le détensionnement des fils opéré par les poulies tractrices dans les têtes de dépose conventionnelles.

La présente invention vise précisément à résoudre ces problèmes en proposant une nouvelle technique de dépose au contact permettant le placement de fils qui, pour des raisons de rigidité insuffisante et/ou de caractère collant trop accentué, ne peuvent être pris en compte par les têtes de dépose au contact traditionnelles.

A cet effet, l'invention a pour objet un procédé de dépose au contact de fils de fibres pré-imprégnées notamment pour la réalisation de structures complexes en matériau composite polymérisé par ionisation, dans lequel au moins un fil est, au cours d'une séquence de dépose, déroulé d'une bobine ou analogue, pressé et déposé sur une surface à recouvrir à l'aide d'un galet de dépose ou analogue, puis coupé lorsque la longueur désirée de fil est déposée, caractérisé en ce qu'il consiste à maintenir sensiblement d'un bout à l'autre de chaque séquence de dépose le fil en contact avec ledit galet, le fil étant déroulé sensiblement sous la seule traction du galet de dépose et maintenu, au moins au début et à la fin du trajet de dépose, pressé contre ladite surface à recouvrir, et, à la fin de la séquence de dépose, à écarter le galet de dépose de ladite surface, puis couper le fil dans sa partie entre le galet et la surface.

Avantageusement, et dans le cas notamment de fils présentant un caractère collant important, entre la bobine de fil et le galet de dépose est constituée une zone de diminution et régulation de tension du fil générant un brin mou ou réserve assurant une alimentation sous faible tension du fil audit galet de dépose.

L'invention a également pour objet un dispositif pour la mise en oeuvre du procédé, ci-dessus, comprenant une tête de dépose montée sur une machine à commande numérique comprenant au moins quatre axes de mobilité et mobile relativement à la surface à recouvrir et comportant un galet de dépose, des moyens d'acheminement dudit fil au galet de dépose, des moyens de freinage du fil et des moyens de coupe du fil, caractérisé en ce que la tête de dépose comporte en outre des moyens pour presser contre la surface à recouvrir la partie de fil déposée, au moins aux deux extrémités du tronçon de fil, en ce que lesdits moyens d'acheminement du fil sont agencés en sorte que le fil demeure constamment en contact avec le galet de dépose sur une partie substantielle de sa surface périphérique et en ce que lesdits moyens de coupe sont agencés pour couper le fil en aval du galet de dépose suivant le sens de défilement du fil en regard du galet.

Avantageusement, le galet de dépose est monté sur la tête de dépose, de manière mobile en direction de la surface à recouvrir.

Suivant un mode de réalisation, lesdits moyens pour presser le fil déposé sur la surface à recouvrir sont constitués par un galet secondaire disposé en amont du galet de dépose, suivant le sens de déplacement de ce dernier par rapport à ladite surface à recouvrir, ledit galet secondaire étant monté escamotable.

Avantageusement, le galet secondaire est en outre monté mobile relativement au galet de dépose et commandé automatiquement pour, au cours de la séquence de dépose, presser le fil déposé sur la surface à recouvrir par roulage sur au moins les deux parties extrêmes du tronçon déposé et, éventuellement, sur toute la longueur dudit tronçon en fonction de la complexité des pièces à réaliser.

Les moyens de coupe du fil sont constitués par exempte par un organe de coupe et une enclume, positionnés de part et d'autre du fil dans sa partie s'étendant entre le galet de dépose en position écartée de la surface à recouvrir et le galet secondaire en position de pressage de la seconde extrémité du tronçon de fil déposé, la partie des moyens de coupe interposée entre le fil et la surface à recouvrir étant escamotable.

La tête de dépose selon l'invention permet de déposer des fils pré-imprégnés dont la rigidité et/ou le caractère collant interdirait l'emploi des têtes conventionnelles, dites à fil poussé, évoquées plus haut. Elle permet bien entendu également la dépose de fils pré-imprégnés utilisables sur de telles têtes conventionnelles.

La tête de dépose selon l'invention est adaptable à tous types de machines de placement de fibres pré-imprégnées pour la réalisation de pièces composites de toutes dimensions et formes, même les plus complexes en particulier celles incluant des surfaces concaves et en particulier des pièces de grandes dimensions dont tout ou partie des fibres sont placées par dépose au contact, ces pièces étant ensuite soumises à une polymérisation par ionisation.

D'autres caractéristiques et avantages ressortiront de la description qui va suivre d'un mode de réalisation d'une tête de dépose mettant en oeuvre le procédé de l'invention, description donnée à titre d'exemple uniquement et en regard des dessins annexés sur lesquels :
- Figure 1 est une vue schématique en élévation latérale d'une tête de dépose conforme à l'invention ;
- Figure 2 est une vue partielle de gauche de la tête de la figure 1,
- Figures 3 à 9 illustrent diverses étapes successives d'une séquence de dépose de fils de la tête de la figure 1, et
- Figure 10 illustre la mise en oeuvre d'une tête de dépose selon l'invention pour la réalisation d'une pièce de forme complexe.

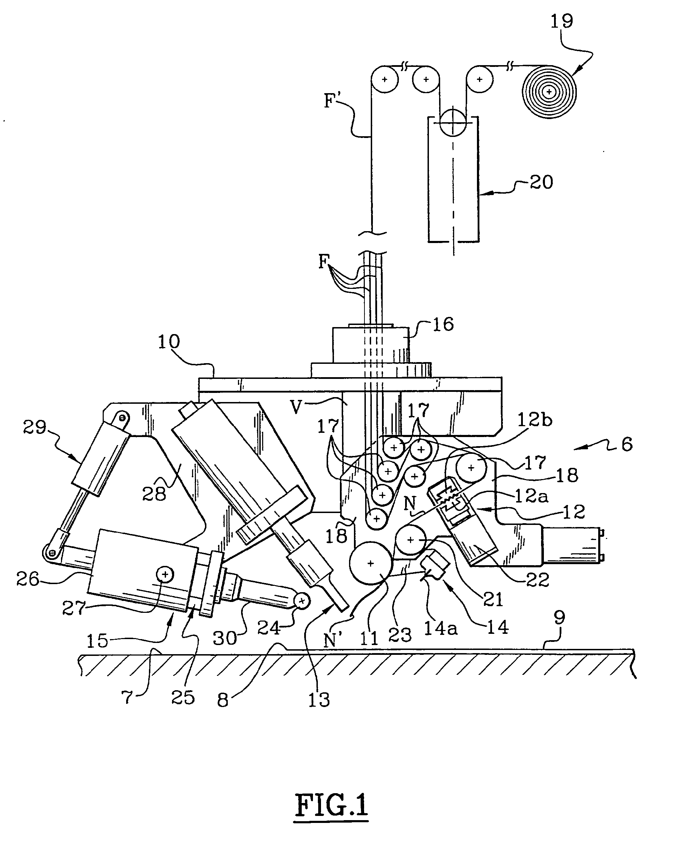

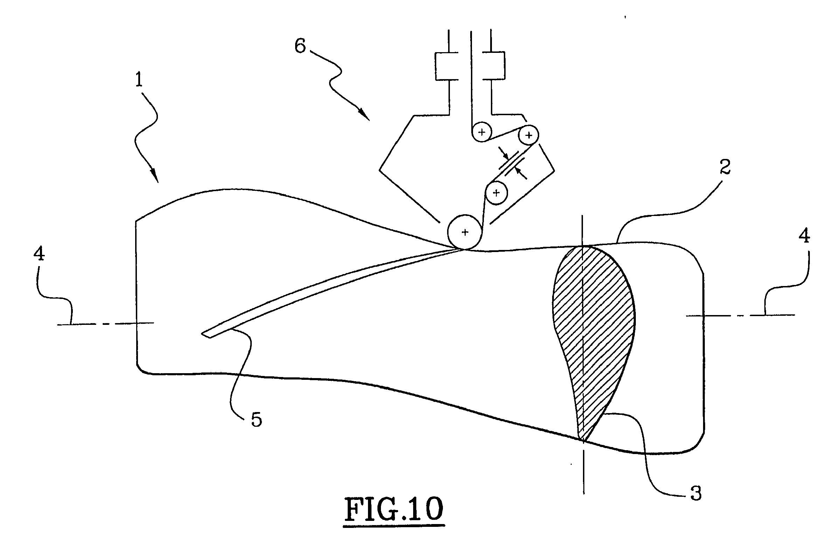

Sur les figures 1 à 9 est représentée plus en détails une tête de dépose au contact, schématisée sur la figure 10 qui illustre une application de l'invention à la réalisation, à titre d'exemple, d'une pièce 1 de dimensions importantes et de forme complexe comportant notamment des parties concaves 2 sur lesquelles il n'est pas possible de placer des fibres par bobinage. En 3, est illustrée une section locale de ladite pièce 1 qui est montée pivotante autour d'un axe 4 entre deux poupées (non représentés) dont l'une est motrice.

En 5 est représenté un fil placé par la tête de dépose 6.

Par fil on entend un groupe de filaments ou fibrilles continues, agglomérées, en forme de ruban ou bande, stocké sur une bobine.

Généralement, plusieurs fils sont présentés côte à côte en formant une nappe et sont déposés simultanément.

Sur la figure 1, on a représenté la tête de dépose au contact 6 en regard d'une surface 7 et à l'aplomb de l'extrémité 8 d'une première couche 9 de fils pré-imprégnés déposés sur la surface 7.

La tête 6 comporte une platine 10 agencée pour permettre le montage de la tête sur une machine (non représentée) comportant, suivant la complexité de la pièce à réaliser, quatre, cinq, six, sept ou plus, axes de mobilité, par exemple une machine du type tour, portique, bras robot, machine de bobinage conventionnelle, etc.

Sur la platine sont montés un galet de dépose 11, des moyens d'acheminement à ce galet des fils pré-imprégnés, rassemblés pour former une nappe N de plusieurs rubans juxtaposés F (quatre dans l'exemple illustré) déposés simultanément, des moyens 12 de freinage de la nappe N, des moyens 13, 14 de coupe de la nappe N et des moyens 15 de pressage de la nappe lors de la dépose sur la surface à recouvrir.

Les fils F sont, dans le mode de réalisation illustré, acheminés à la manière connue au travers d'un puits 16 d'axe coïncidant avec l'axe de rotation de la tête 6, correspondant lui-même à l'axe de rotation machine, en direction d'un jeu 17 de poulies de renvoi et de formation de la nappe N, portées par une plaque 18.

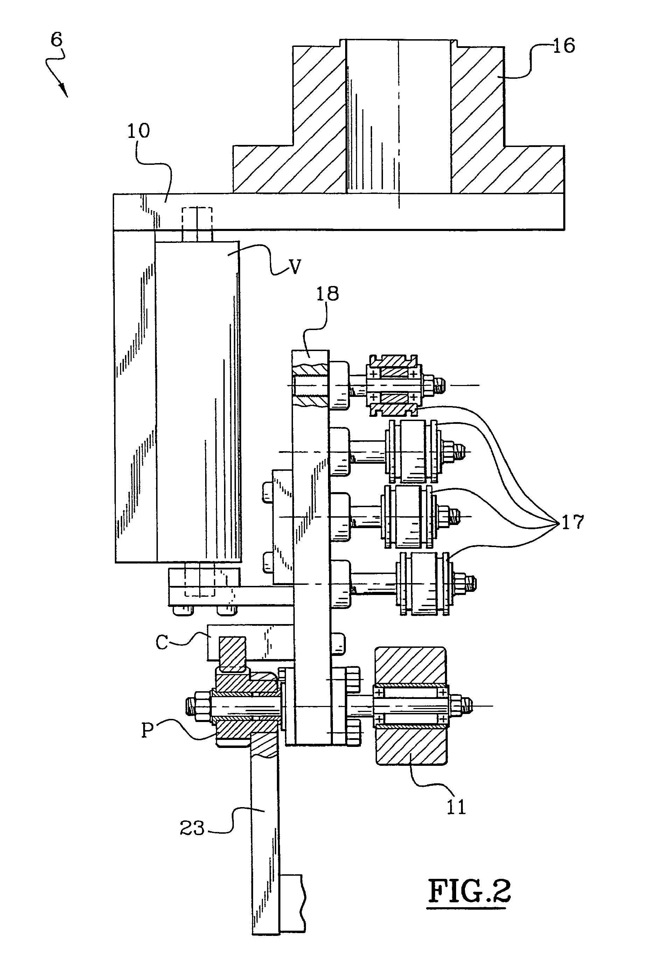

La plaque 18 est montée mobile en translation dans son plan par rapport à la platine 10 grâce à un vérin V solidaire de ladite platine et dont la tige est reliée latéralement à la plaque 18 (figure 2).

Les fils F, symbolisés par le fil unique F' en haut de la figure 1, sont déroulés à partir de plusieurs bobines 19 conventionnelles, un système de diminution et régulation de tension 20 étant interposé entre les bobines 19 et la tête 6 à des fins de constitution d'une réserve assurant une faible tension aux fils en cours de dépose et, dans le cas où les bobines 19 sont à poste fixe, une compensation des mouvements relatifs entre les bobines et la tête 6 lorsque cette dernière s'éloigne des bobines pour effectuer une dépose.

Le galet de dépose 11 est porté par la plaque 18, ainsi qu'une poulie auxiliaire 21, interposée entre le galet 11 et la dernière poulie 17 de formation de la nappe N. La poulie 21 est destinée à plaquer la nappe N sur une plus grande surface du galet 11 à des fins expliquées plus loin.

Il est à noter que ce système 20 peut être supprimé et remplacé par une motorisation des galets 17, 21 et accessoirement 11, asservie à la dépose, assurant un défilement de nappe compatible avec la vitesse de défilement de la nappe déposée et de manière à délivrer le fil avec une tension très faible.

Entre ladite dernière poulie 17 et la poulie 21 est disposé le frein de nappe 12 constitué de deux mâchoires 12a, 12b disposées de part et d'autre de la nappe et déplacées par un vérin 22.

Les moyens de coupe 13, 14 de la nappe N comprennent une enclume vibrante ultrasonore (13) montée fixe et un organe de coupe (14) constitué par exemple par une lame mince 14a, monté escamotable, par exemple par rotation autour d'un axe coaxial à l'axe du galet 11, la lame étant fixée à l'extrémité d'un bras 23, représenté sur la figure 1 en position relevée d'escamotage.

Le moyen 15 de pressage de la nappe N déposée sur la surface à recouvrir (couche 9 déjà déposée) comprend un galet secondaire 24 d'axe flottant, monté à l'extrémité de la tige 25 d'un vérin glissière 26, lui-même articulé autour d'un axe 27 sur une plaque 28 de la tête 6.

Ce pivotement du vérin 26 autour de l'axe 27 est assuré par un vérin 29 ancré sur la plaque 28.

Les moyens de commande du frein 12, du système de coupe 13, 14, des vérins 26 et 29, ainsi que les moyens de commande des divers axes de mobilité de la tête 6 sont bien entendu reliés à un système de pilotage (non représenté).

Sur la figure 1, la tête 6 est en position de repos, à l'aplomb de la bordure de la couche 9 déjà déposée, prête à engager une séquence de dépose sur la couche 9 d'un tronçon de nappe N.

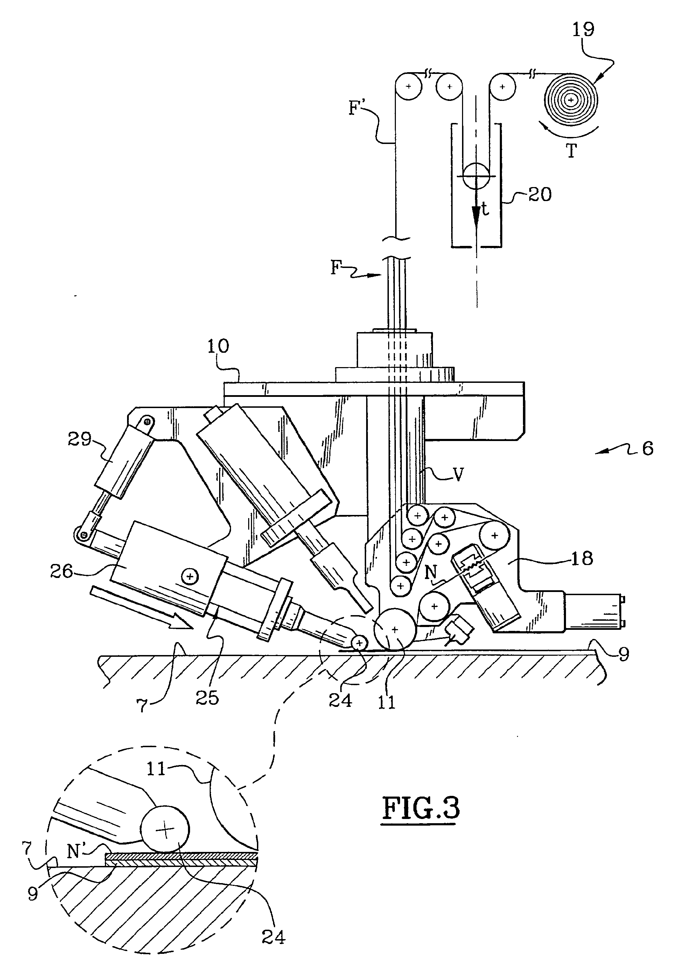

Du fait du caractère collant des fibres pré-imprégnées de la nappe N, celle-ci reste adhérente au galet de dépose 11. La disposition particulière de la poulie 21 par rapport au galet 11 a précisément pour objet d'augmenter, au repos, la surface d'adhérence entre le galet 11 et la nappe, en sorte qu'entre deux séquences de pose, l'extrémité libre de la nappe N demeure en quelque sorte pendue au galet 11, en bonne position pour un placement correct (figure 3) de cette extrémité sur la surface à recouvrir.

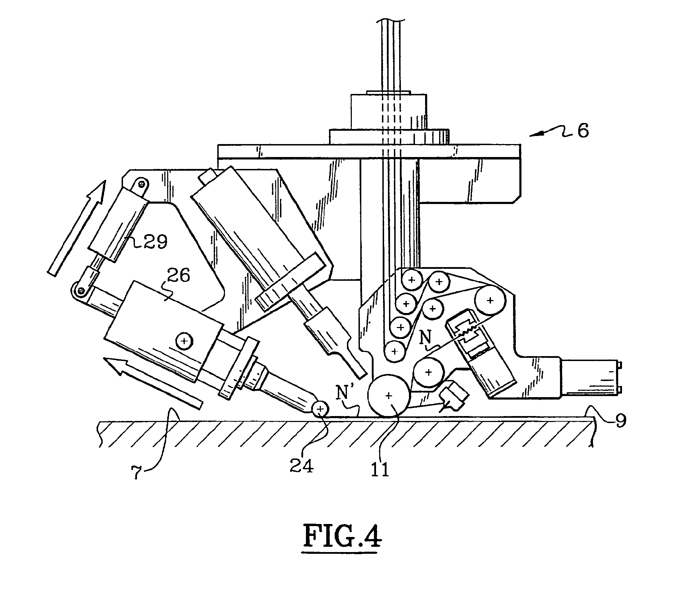

Le galet de dépose 11 est tout d'abord approché de la surface 9 jusqu'au contact, pendant qu'une traction t (figure 4) est exercée sur le système de détensionnement 20 pour constituer une réserve de fil.

Pendant cette approche, le galet 11 va d'une part se rapprocher de la surface 7 et dans la dernière partie de l'approche se déplacer dans le sens de dépose pour en finale contacter la surface à recouvrir comme pour une manoeuvre d'atterrissage.

Cette approche du galet 11 est obtenue par les mouvements machines (atterrissage).

Le vérin V est maintenu flottant pendant la descente du galet 11 et n'est actionné qu'après l'atterrissage pour assurer la pression de contact de la nappe qui sera déposée sur la surface à recouvrir.

La partie d'extrémité N' de la nappe (figure 1) va ainsi venir se superposer à la lisière de la couche 9.

Le galet secondaire 24 est ensuite amené à hauteur du galet de dépose 11 en sorte de presser ladite partie N' contre la couche 9 immédiatement en amont du galet 11 suivant le sens de déplacement de ce dernier le long de la surface 9.

L'étape suivante est le lissage de ladite partie N' par roulage (figure 4) de cette partie par le galet secondaire 24 s'éloignant du galet 11 par actionnement conjugué des vérins 26 et 29, la tête 6 demeurant immobile.

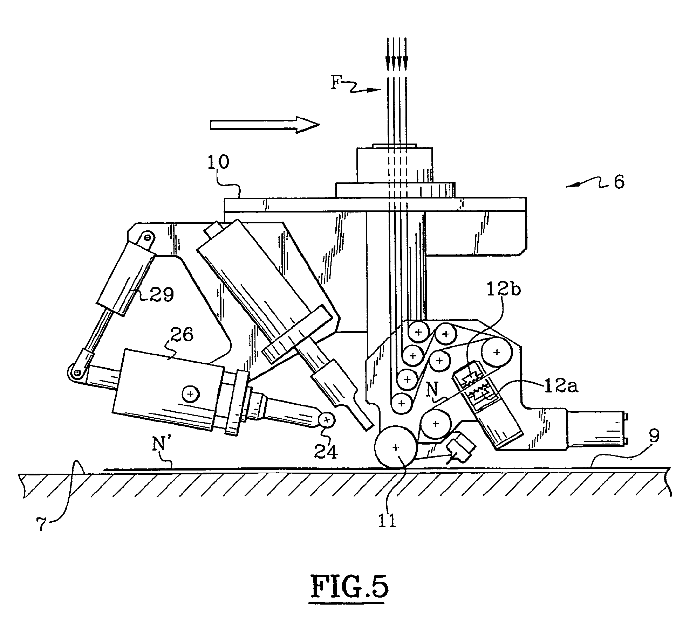

A la fin du lissage, le galet secondaire 24 est rétracté (position de la figure 1), les mâchoires 12a, 12b du frein 12 sont desserrées et la tête 6 est déplacée (figure 5) de façon à faire plaquer la nappe N par le galet 11 sur la couche 9.

Le galet secondaire 24 peut être éventuellement descendu (cette phase n'étant pas représentée sur la figure 5) pour rouler sur la nappe en cours de dépose et bien la plaquer contre la couche 9 sous-jacente.

Pendant tout le déplacement de la tête 6, les fils F sont tirés par le galet 11 sous une tension faible, réglable, déterminée par le système 20 (tension t), associé au système de frein des bobines 19 (tension T), la tension des fils étant égale à t/2, les bobines étant immobiles (T=0).

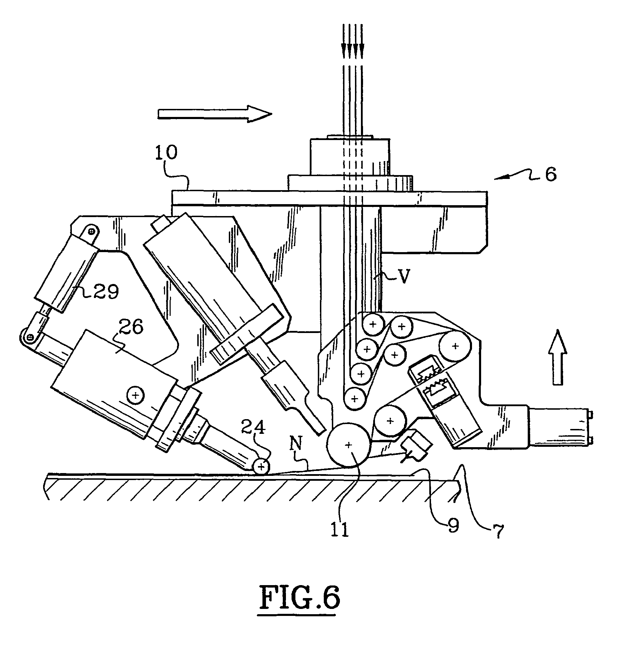

Lorsque la tête 6 arrive (figure 6) à quelque distance de l'autre extrémité de la couche 9 à recouvrir, le galet 24 étant (ou non) pressé contre la nappe en cours de dépôt, le galet 11 est légèrement relevé par actionnement du vérin V, en sorte que le placement de la nappe N contre la couche 9 se poursuit par la seule action du galet secondaire 24.

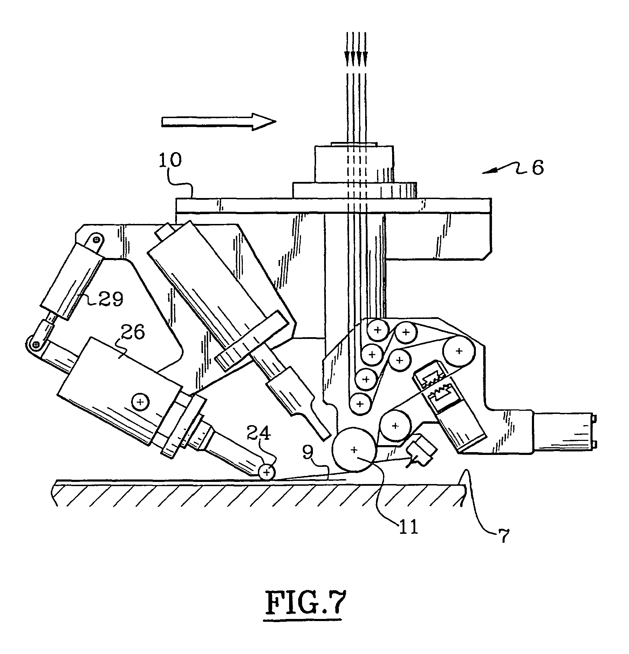

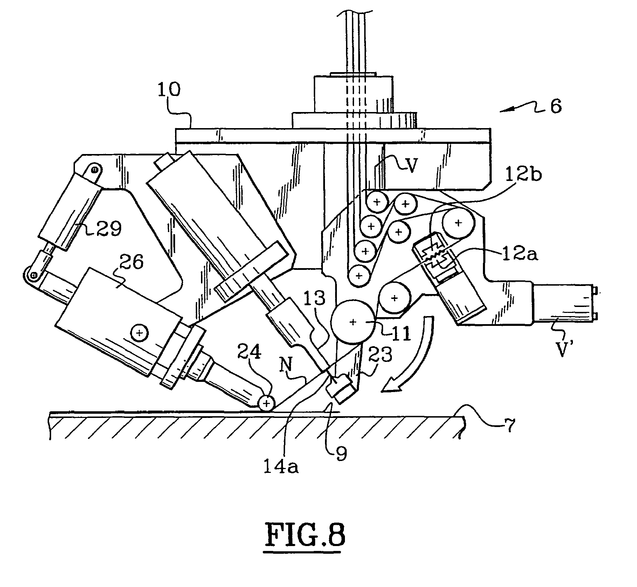

Arrivée à l'aplomb (figure 7) de l'autre extrémité de la couche 9, la tête 6 s'arrête, le galet 11 s'éloigne de la surface 7 par actionnement du vérin V en sorte de placer la section de nappe N entre les galets 11 et 24 contre l'enclume 13 du dispositif de coupe (figure 8). La lame de coupe 14a est alors amenée en regard de l'enclume par pivotement du bras 23 à l'aide d'un vérin V' réglable en pression, agissant par l'intermédiaire (figure 2) d'une crémaillère C et d'un pignon P. Une temporisation permet de régler la durée de la coupe. La fréquence vibratoire de l'enclume 13 est également réglable. Afin de permettre le réglage de l'angle de coupe de la nappe N, l'ensemble enclume 13 et lame 14a est orientable jusqu'à ± 45° par rapport à un axe perpendiculaire à la nappe, à l'aide par exemple d'un moteur électrique piloté par la commande numérique de la machine.

Lors du relevage du galet 11 pour la coupe de la nappe N, les mâchoires 12a, 12b sont serrées.

Le but de ce léger relèvement du galet 11 est d'éviter le décollement de l'extrémité de la couche 9 précédemment déposée, lors du recul de la tête, une fois arrivée à l'aplomb de l'extrémité de la couche 9, pour se mettre en position de coupe de la nappe N.

Le léger relevage du galet 11 est assuré par exemple par l'actionnement du vérin V dont la course est stoppée à la hauteur désirée à l'aide d'une butée escamotable. Le recul final du galet en fin de placement, pour passer à la position de coupe de la nappe, est alors assuré également par le vérin V dont la course n'est plus alors entravée (butée escamotée).

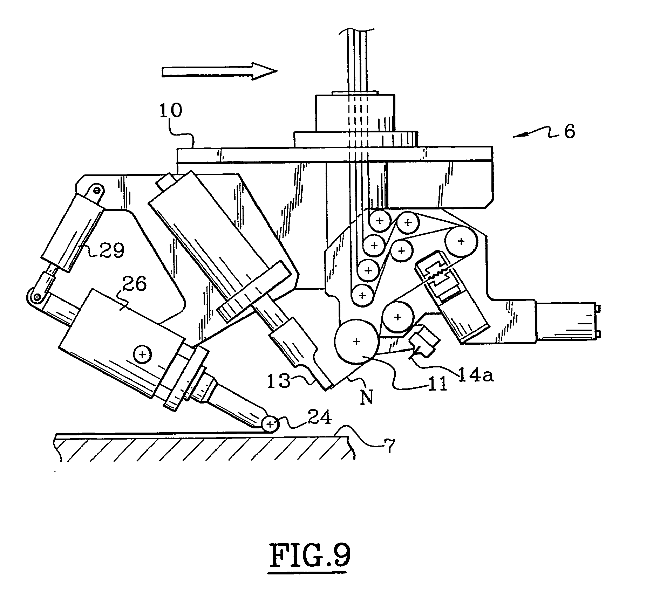

Lorsque la coupe est réalisée, la lame 14a s'escamote en revenant à sa position d'origine et la tête 6 reprend sa course de déplacement (figure 9) pour permettre au galet 24 le placement et le lissage de la section terminale du tronçon de nappe qui vient d'être déposé, la coupe de la nappe étant bien entendu déterminée en sorte que le tronçon découpé recouvre exactement la couche 9, ou non, en fonction de la position définie sur la pièce à réaliser.

Le galet secondaire 24 est alors rétracté dans la position de repos de la figure 1 et la tête 6 peut être positionnée (figure 1) pour une nouvelle séquence de dépose.

Les galets 11, 24 sont de préférence des galets souples, libres en rotation et dont la pression sur la surface de contact peut être réglée, par réglage de la pression du vérin de commande (V, 26). La surface de ces galets peut être revêtue de différents matériaux à la fois suffisamment adhérents, pour ce qui concerne le galet 11, pour que l'extrémité N' de la nappe N reste collée au galet 11 entre deux séquences de dépose (figure 1) et pas trop adhérents pour que les galets 11, 24 n'entraînent pas avec eux la couche déposée, lors de leur recul.

La souplesse des galets 11, 24, eux-mêmes montés avantageusement sur des axes souples, permet d'épouser la surface à recouvrir. Pour parfaire ce contact, le galet secondaire 24 est en outre avantageusement fixé à l'extrémité d'une fourchette orientable 30 (figure 1).

Les mâchoires 12a, 12b sont constituées par exemple de sabots revêtus d'une tissu adhésif amovible.

Le frein 12 permet de maintenir la nappe N pendant la coupe et pendant le déplacement de la tête 6 vers le nouveau point de départ d'une séquence de dépose.

Le nombre d'axes de mobilité de la tête 6 est fonction de la complexité des formes des pièces à réaliser, ainsi que des trajectoires de fils dans les formes de pièces. Le support de la surface 7 à revêtir peut ainsi être équipé d'axes pilotés.

La tête 6 est équipée d'un automate piloté par la commande numérique pour gérer les fonctions mécaniques de la tête.

Les bobines de fils 19 peuvent être embarquées sur la tête 6 si celle-ci est suffisamment volumineuse et le bras-support de la machine suffisamment dimensionné.

Le cheminement des fils (F') en amont de la tête 6 permet d'assurer de faibles tensions de fils au niveau de la tête 6 et de réaliser une réserve de fil (20) assurant des tensions de fils faibles. Les mouvements machines permettent aussi la détension des fils afin d'assurer une tension presque nulle lors du départ de chaque dépose de fils.

La tête de dépose de l'invention permet d'arrêter la dépose à l'endroit voulu et de redémarrer la dépose à un autre endroit. Elle permet de réaliser des déposes de fils jointifs ou de nappes de fils jointives dans un périmètre déterminé sur des surfaces quelconques et donc de réaliser des déposes localement pour réaliser des renforts suivant par exemple plusieurs couches superposées de fils ou nappes jointifs orientés différemment d'une couche à l'autre.

La tête de dépose de l'invention accepte bien des fils utilisables sur les têtes de dépose conventionnelles du type "fil poussé".

L'état collant des fibres pré-imprégnées étant variable suivant les conditions climatiques ambiantes, il est possible, si les conditions ne sont pas favorables à la dépose, de rajouter à la tête 6 une arrivée d'air chaud régulé permettant de réchauffer localement pendant la dépose la surface à recouvrir pour avoir plus de collant. D'autre part, si le fil pré-imprégné est trop collant, il est possible, afin qu'il ne s'enroule pas autour du galet de dépose 11, de rajouter à la tête 6 une arrivée d'air froid régulé, pour refroidir le galet de dépose, rendant ainsi ce dernier moins collant.

Le procédé de l'invention est applicable à la réalisation de pièces composites de type tôlerie ainsi que des pièces structurales entrant dans la réalisation des avions, par exemple fuselages ou parties de fuselage. Il est aussi possible de réaliser des réservoirs de propulseurs, des jupes de réservoirs ainsi que des jupes inter-étages d'engins.

Des applications maritimes sont envisageables, par exemple la réalisation de coques de bateaux, de containers, de flotteurs, etc...

L'invention n'est évidemment pas limitée au mode de réalisation représenté et décrit ci-dessus, mais en couvre au contraire toutes les variantes, notamment en ce qui concerne le nombre de fils déposés en même temps, ainsi que la structure et l'agencement des moyens de freinage (12), de coupe (13, 14) des fils, ou de pressage (galets 11, 24) des fils sur la surface à recouvrir.

Par ailleurs, suivant une variante de fonctionnement, la tête 6 pourrait n'utiliser le galet 11 que pour l'amorçage de la dépose, le galet 24 étant alors utilisé pour le pressage de la nappe contre la surface sous-jacente, tout au long de sa dépose. A cet effet, le galet 11 serait réduit en taille et positionné en avant de l'axe de la tête et le galet 24 serait de taille plus importante et positionné dans l'axe de la tête, comme l'est le galet 11 sur les figures 1 à 9.

## Revendications

1. Procédé de dépose au contact de fils de fibres pré-imprégnées notamment pour la réalisation de structures complexes en matériau composite polymérisée par ionisation, dans lequel au moins un fil (N) est, au cours d'une séquence de dépose, déroulé d'une bobine (19), puis pressé et déposé sur une surface à recouvrir (9) à l'aide d'un galet de dépose (11), puis coupé lorsque la longueur désirée de fil est déposée, **caractérisé en ce qu'**il consiste à maintenir sensiblement d'un bout à l'autre de chaque séquence de dépose le fil (N) en contact avec ledit galet (11), et entre deux séquences de pose, une extrémité libre du fil (N') pendue au galet (11), le fil étant déroulé sensiblement sous la seule traction du galet de dépose et maintenu, au moins au début et à la fin du trajet de dépose, pressé contre ladite surface à recouvrir au moyen d'un galet secondaire (24) d'axe flottant et monté mobile relativement par rapport au galet de dépose (11), et à la fin de la séquence de dépose, à écarter le galet de dépose (11) de ladite surface (9), puis couper le fil dans sa partie entre le galet et la surface.

2. Procédé suivant la revendication 1, **caractérisé en ce que** dans le cas notamment de fils présentant un caractère collant important, entre la bobine de fil (19) et le galet de dépose (11) est constituée une zone (20) de diminution et régulation de tension du fil générant un brin mou ou réserve assurant une alimentation sous faible tension du fil (N) audit galet de dépose (11).

3. Dispositif pour la mise en oeuvre du procédé suivant la revendication 1 ou 2, comprenant une tête de dépose (6) montée sur une machine à commande numérique comprenant au moins quatre axes de mobilité et mobile relativement à la surface à recouvrir (9) et comportant un galet de dépose (11), des moyens (17, 21) d'acheminement dudit fil au galet de dépose, des moyens (12) de freinage du fil et des moyens (13, 14) de coupe du fil, **caractérisé en ce que** la tête de dépose (6) comporte en outre des moyens (15) constitués par un galet secondaire (24) monté mobile relativement par rapport au galet de dépose (11) pour presser contre la surface à recouvrir (9) la partie de fil déposée, au moins aux deux extrémités du tronçon de fil, **en ce que** lesdits moyens (17,21) d'acheminement du fil (N) sont agencés en sorte que le fil demeure constamment en contact avec le galet de dépose (11) sur une partie substantielle de sa surface périphérique tout en ayant une extrémité libre du fil (N') demeurant pendue au galet (11) et **en ce que** lesdits moyens de coupe (13, 14) sont agencés pour couper le fil en aval du galet de dépose (11) suivant le sens de défilement du fil en regard du galet

4. Dispositif suivant la revendication 3, **caractérisé en ce que** le galet de dépose (11) est monté sur la tête de dépose (6), de manière mobile en direction de la surface à recouvrir (9).

5. Dispositif suivant la revendication 3 ou 4, **caractérisé en ce que** ledit galet secondaire (24) est disposé en amont du galet de dépose (11), suivant le sens de déplacement de ce dernier par rapport à ladite surface à recouvrir, ledit galet secondaire (24) étant monté escamotable.

6. Dispositif suivant la revendication 5, **caractérisé en ce que** le galet secondaire (24) est en outre commandé automatiquement pour, au cours de la séquence de dépose, presser le fil déposé sur la surface à recouvrir (9) par roulage sur au moins les deux parties extrêmes du tronçon déposé et, éventuellement, sur toute la longueur dudit tronçon.

7. Dispositif suivant l'une des revendications 3 à 6, **caractérisé en ce que** les moyens de coupe du fil (N) sont constitués par un organe de coupe (14a) et une enclume (13), positionnés de part et d'autre du fil (N) dans sa partie s'étendant entre le galet de dépose (11) en position écartée de la surface à recouvrir (9) et le galet secondaire (24) en position de pressage de la seconde extrémité du tronçon de fil déposé, la partie (14a) des moyens de coupe interposée entre le fil (N') et la surface à recouvrir (9) étant escamotable.

8. Dispositif suivant l'une des revendications 3 à 7, **caractérisé en ce que** dans la dernière partie de la trajectoire de dépose du fil (N), le galet de dépose (11) est légèrement éloigné de la surface à recouvrir (9), la dépose du fil étant alors assurée par le galet secondaire (24).

9. Dispositif suivant l'une des revendications 3 à 8, **caractérisé en ce que** la tête de dépose (6) est munie d'une arrivée d'air chaud régulé dirigé vers la surface à recouvrir (9).

10. Dispositif suivant l'une des revendications 3 à 9, **caractérisé en ce que** la tête-de dépose (6) est munie d'une arrivée d'air froid régulé dirigé vers la surface du galet de dépose (11).

11. Dispositif suivant l'une des revendications 3 à 10, **caractérisé en ce que** lesdits moyens (17, 21) d'acheminement du fil au galet de dépose (11) sont des galets motorisés ainsi qu'éventuellement ledit galet (11), ces galets assurant un défilement de nappe compatible avec la vitesse de défilement de la nappe déposée (N) et de manière à délivrer le fil avec une tension très faible.

12. Dispositif suivant la revendication 5, **caractérisé en ce que** ledit galet de dépose (11) n'est utilisé que pour l'amorçage de la dépose, ledit galet secondaire (24) étant utilisé pour effectuer la dépose et positionné dans l'axe de la tête (6), le galet (11) étant lui-même positionné en avant du galet (24) suivant le sens de déplacement de la tête pour la dépose.

## Claims

1. A method for the contact deposition of threads of preimpregnated fibres in particular for producing complex structures made from composite material polymerised by ionisation, wherein at least one thread (N) is, during a deposition sequence, unwound from a reel (19) and then pressed and deposited on a surface to be covered (9) by means of a deposition roller (11), and then cut when the required length of thread is deposited, **characterised in that** it comprises, substantially from one end to the other of each deposition sequence, keeping the thread (N) in contact with said roller (11) and, between two placing sequences, keeping a free end of the thread (N') suspended from the roller (11), the thread being unwound substantially under the sole traction of the deposition roller and, at least at the start and end of the deposition path, kept pressed against said surface to be covered by means of a secondary roller (24) with a floating axis and mounted so as to be able to move relatively with respect to the deposition roller (11), and, at the end of the deposition sequence, moving the deposition roller (11) away from said surface (9), and then cutting the thread in the part thereof between the roller and the surface.

2. A method according to claim 1, **characterised in that**, in the case in particular of threads having a high sticky character, between the reel of thread (19) and the deposition roller (11), an area (20) is formed for reducing and regulating the tension of the thread, generating a slack strand or a reserve ensuring a supply of the thread (N) under low tension to the deposition roller (11).

3. A device for implementing the method according to claim 1 or 2, comprising a deposition head (6) mounted on a numeric control machine comprising at least four mobility axes and able to move relative to the surface to be covered (9) and comprising a deposition roller (11), means (17, 21) for routing said thread to the deposition roller, means (12) for braking the thread and means (13, 14) for cutting the thread, **characterised in that** the deposition head (6) also comprises means (15) formed by a secondary roller (24) mounted so as to be able to move relatively with respect to the deposition roller (11) in order to press the deposited thread part against the surface to be covered (9), at least at the two ends of the portion of thread, **in that** said means (17, 21) for routing the thread (N) is arranged so that the thread remains constantly in contact with the deposition roller (11) over a substantial part of the peripheral surface thereof while having a free end of the thread (N') remaining suspended from the roller (11), and **in that** said cutting means (13, 14) is arranged to cut the thread downstream of the deposition roller (11) in the direction of travel of the thread opposite the roller.

4. A device according to claim 3, **characterised in that** the deposition roller (11) is mounted on the deposition head (6), so as to be able to move in the direction of the surface to be covered (9).

5. A device according to claim 3 or 4, **characterised in that** said secondary roller (24) is disposed upstream of the deposition roller (11), in the direction of movement of the latter with respect to said surface to be covered, said secondary roller (24) being mounted so as to be retractable.

6. A device according to claim 5, **characterised in that** the secondary roller (24) is also controlled automatically so as, during the deposition sequence, to press the deposited thread on the surface to be covered (9) by rolling on at least the two end parts of the deposited portion and, optionally, over the entire length of said portion.

7. A device according to one of claims 3 to 6, **characterised in that** the means of cutting the thread (N) is formed by a cutting member (14a) and an anvil (13), positioned on either side of the thread (N) in the part thereof extending between the deposition roller (11) in the position away from the surface to be covered (9) and the secondary roller (24) in the position of pressing the second end of the deposited thread portion, the part (14a) of the cutting means interposed between the thread (N') and the surface to be covered (9) being retractable.

8. A device according to one of claims 3 to 7, **characterised in that**, in the last part of the deposition path of the thread (N), the deposition roller (11) is slightly away from the surface to be covered (9), the deposition of the thread then being provided by the secondary roller (24).

9. A device according to one of claims 3 to 8, **characterised in that** the deposition head (6) is provided with an inlet for regulated hot air directed towards the surface to be covered (9).

10. A device according to one of claims 3 to 9, **characterised in that** the deposition head (6) is provided with an inlet for regulated cold air directed towards the surface of the deposition roller (11).

11. A device according to one of claims 3 to 10, **characterised in that** said means (17, 21) for routing the thread to the deposition roller (11) are rollers that are motorised as well as optionally said roller (11), these rollers ensuring a sheet travel compatible with the speed of travel of the deposited sheet (N) and so as to deliver the thread with a very low tension.

12. A device according to claim 5, **characterised in that** said deposition roller (11) is used only for the initiating of the deposition, said secondary roller (24) being used to perform the deposition and positioned in the axis of the head (6), the roller (11) being itself positioned in front of the roller (24) in the direction of movement of the head for the deposition.

## Patentansprüche

1. Verfahren zum Ablagern von Garnen aus vorimprägnierten Fasern in gegenseitigem Kontakt insbesondere für die Herstellung komplexer Strukturen aus mittels Ionisation polymerisiertem Verbundwerkstoff, wobei wenigstens ein Garn (N) während einer Ablagerungsabfolge von einer Spule (19) abgewickelt wird, dann auf eine abzudeckende Oberfläche (9) mit Hilfe einer Ablagerungsrolle (11) gepresst und abgelagert wird und dann abgeschnitten wird, wenn die gewünschte Länge des Garns abgelagert ist, **dadurch gekennzeichnet, dass** es darin besteht, im Wesentlichen von einem Ende zum anderen jeder Ablagerungsfolge das Garn (N) in Kontakt mit der Rolle (11) zu halten und zwischen zwei Ablegeabfolgen ein freies Ende des Garns (N') aufgehängt an der Rolle (11) zu halten, wobei das Garn im Wesentlichen nur unter dem Zug der Ablagerungsrolle abgewickelt und wenigstens am Beginn und am Ende der Ablagerungsbahn gegen die abzudeckende Oberfläche mittels einer sekundären Rolle (24) mit schwebender Achse, die relativ zu der Ablagerungsrolle (11) beweglich montiert ist, gepresst gehalten wird, und am Ende der Ablagerungsabfolge die Ablagerungsrolle (11) von der Oberfläche (9) zu beabstanden und dann das Garn in seinem Teil zwischen der Rolle und der Oberfläche abzuschneiden.

2. Verfahren nach Anspruch 1, **dadurch gekennzeichnet, dass** insbesondere im Fall von Garnen, die eine stark klebende Eigenschaft aufweisen, zwischen der Garnspule (19) und der Ablagerungsrolle (11) eine Zone (20) zur Verringerung und Regulierung des Zugs des Garns gebildet ist, wodurch ein durchhängender oder Reservefaden erzeugt wird, der eine Versorgung unter geringer Spannung des Garns (N) zu der Ablagerungsrolle (11) sicherstellt.

3. Vorrichtung für die Ausführung des Verfahrens nach Anspruch 1 oder 2, die einen Ablagerungskopf (6) aufweist, der an einer Maschine mit numerischer Steuerung montiert ist, die wenigstens vier Mobilitätsachsen aufweist und relativ zu der abzudeckenden Oberfläche (9) beweglich ist und eine Ablagerungsrolle (11), Mittel (17, 21) zum Führen des Garns zu der Ablagerungsrolle, Mittel (12) zum Bremsen des Garns und Mittel (13, 14) zum Abschneiden des Garns umfasst, **dadurch gekennzeichnet, dass** der Ablagerungskopf (6) außerdem Mittel (16) umfasst, die durch eine sekundäre Rolle (24) gebildet sind, die in Bezug auf die Ablagerungsrolle (11) relativ beweglich montiert ist, um den Teil des abgelagerten Garns wenigstens an den zwei Enden eines Garnteilstücks gegen die abzudeckende Oberfläche (9) zu pressen, dass die Mittel (17, 21) zum Führen des Garns (N) in der Weise ausgebildet sind, dass das Garn auf einem wesentlichen Teil seiner Umfangsoberfläche ständig in Kontakt mit der Ablagerungsrolle (11) bleibt und dabei ein freies Ende des Garns (N') an der Rolle (11) aufgehängt bleibt, und dass die Schneidemittel (13, 14) dazu ausgelegt sind, das Garn stromabseitig der Ablagerungsrolle (11) in Richtung der Vorbeibewegung des Garns an der Rolle abzuschneiden.

4. Vorrichtung nach Anspruch 3, **dadurch gekennzeichnet, dass** die Ablagerungsrolle (11) am Ablagerungskopf (6) beweglich in Richtung der abzudeckenden Oberfläche (9) montiert ist.

5. Vorrichtung nach Anspruch 3 oder 4, **dadurch gekennzeichnet, dass** die sekundäre Rolle (24) stromaufseitig der Ablagerungsrolle (11) in Richtung der Vorbeibewegung dieser Letzteren in Bezug auf die abzudeckende Oberfläche angeordnet ist, wobei die sekundäre Rolle (24) ausfahrbar montiert ist.

6. Vorrichtung nach Anspruch 5, **dadurch gekennzeichnet, dass** die sekundäre Rolle (24) außerdem automatisch gesteuert wird, um während der Ablagerungsabfolge das abgelagerte Garn durch Rollen wenigstens auf den zwei Endabschnitten des abgelagerten Teilstücks und eventuell auf der gesamten Länge des Teilstücks gegen die abzudeckende Oberfläche (9) zu pressen.

7. Vorrichtung nach einem der Ansprüche 3 bis 6, **dadurch gekennzeichnet, dass** die Mittel zum Abschneiden des Garns (N) durch ein Schneideorgan (14a) und einen Amboss (13), die beiderseits des Garns (N) in seinem Abschnitt, der sich zwischen der Ablagerungsrolle (11) in der beabstandeten Position von der abzudeckenden Oberfläche (9) und der sekundären Rolle (24) in der Position zum Pressen des zweiten Endes des Teilstücks des abgelagerten Garns erstreckt, positioniert sind, gebildet sind, wobei der Abschnitt (14a) der Schneidemittel, der zwischen das Garn (N') und die abzudeckende Oberfläche (9) eingefügt ist, zurückziehbar ist.

8. Vorrichtung nach einem der Ansprüche 3 bis 7, **dadurch gekennzeichnet, dass** im letzten Teil der Bahn der Ablagerung des Garns (N) die Ablagerungsrolle (11) von der abzudeckenden Oberfläche (9) geringfügig entfernt wird, wobei die Ablagerung des Garns dann durch die sekundäre Rolle (24) sichergestellt ist.

9. Vorrichtung nach einem der Ansprüche 3 bis 8, **dadurch gekennzeichnet, dass** der Ablagerungskopf (6) mit einer Zuführung für regulierte heiße Luft versehen ist, die zu der abzudeckenden Oberfläche (9) gerichtet ist.

10. Vorrichtung nach einem der Ansprüche 3 bis 9, **dadurch gekennzeichnet, dass** der Ablagerungskopf (6) mit einer Zuführung für regulierte kalte Luft versehen ist, die zu der Oberfläche der Ablagerungsrolle (11) gerichtet ist.

11. Vorrichtung nach einem der Ansprüche 3 bis 10, **dadurch gekennzeichnet, dass** die Mittel (17, 21) zum Führen des Garns zu der Ablagerungsrolle (11) ebenso wie eventuell die Rolle (11) motorbetriebene Rollen sind, wobei diese Rollen eine Vorbeibewegung der Lage sicherstellen, die mit der Vorbeibewegungsgeschwindigkeit der abgelagerten Lage (N) kompatibel ist, und so, dass das Garn mit einer sehr geringen Spannung ausgegeben wird.

12. Vorrichtung nach Anspruch 5, **dadurch gekennzeichnet, dass** die Ablagerungsrolle (11) nur am Beginn der Ablagerung verwendet wird, wobei die sekundäre Rolle (24) verwendet wird, um die Ablagerung auszuführen, und in der Achse des Kopfes (6) positioniert ist, wobei die Rolle (11) ihrerseits vor der Rolle (24) in Richtung der Verlagerung des Kopfes für die Ablagerung positioniert ist.
